# EUROPÄISCHE PATENTSCHRIFT

(11) **EP 1 674 372 B1**
(45) Veröffentlichungstag und Bekanntmachung des Hinweises auf die Patenterteilung: **27.07.2016**
(21) Anmeldenummer: 05024485.4
(22) Anmeldetag: 10.11.2005
(51) Int. Cl.: B62B 5/04

(54) **Verkaufs- und Transportbehälter zur Warenpräsentation**
Transport and sales container for the presentation of articles
Récipient de transport et de vente pour la présentation de marchandises

(30) Priorität: 26.11.2004 DE 202004018384 U
(43) Veröffentlichungstag der Anmeldung: 28.06.2006
(73) Patentinhaber: Kesseböhmer Holding KG, 49152 Bad Essen (DE)
(72) Erfinder: Kleinfeld, Martin, 49152 Bad Essen (DE)
(74) Vertreter: Pott, Ulrich

(56) Entgegenhaltungen:
- DE-U1- 7 628 135
- US-A- 2 185 073
- US-A- 3 356 434
- US-A1- 2004 105 733

## Beschreibung

Die Erfindung betrifft einen Verkaufs- und Transportbehälter zur Warenpräsentation mit insbesondere einen großvolumigen Gitterkorb bildenden Gitterwänden gemäß dem Oberbegriff des Anspruchs 1.

Bei einem bekannten Verkaufs- und Transportbehälter dieser Art (DE 76 28 1 35) sind vertikale Längs- und Querseitenwände bildende Gitterwand-Teile an einem Gestell mit eckseitigen Stützpfosten gehalten, die im Bereich jeweiliger Stützfüße mit eine Fahrbewegung des Behälters ermöglichenden Stützrollen versehen sind. Zur Festlegung dieses Behälters am Aufstellungsort sind die Stützrollen durch jeweilige auflegbare Arretiervorrichtungen mittels einer Reibungsbremse gehalten, so daß mit deren geringem Bremswiderstand nur Behälter mit geringem Beladungsgewicht gegen ungewollte Bewegung gesichert sind.

In der US-A-2 185 073 ist eine aus Wandplatten bestehende Wiegevorrichtung bekannt, die eine Hubvorrichtung aufweist. Diese Hubvorrichtung weist einen im Bereich einer Seitenplatte verlagerbaren Spannhebel auf, der von der Seitenwand wegbewegt wird und damit in Gebrauchslage der ortsfesten Wiegevorrichtung eine erhebliche Kollisionsgefahr darstellt.

Gemäß DE 76 28 135 U1 wird ein Behälter beschrieben, dessen einander zugeordnete Seitenwände mittels Scharnierteilen verbunden sind. Deren untere Teilbereiche weisen jeweilige Stützen mit Rollen auf. Diese können lediglich einzeln durch Bremsen arretiert werden, so dass die Rollen in Bodenkontakt bleiben und der Behälter verschiebbar ist.

Die Erfindung befaßt sich mit dem Problem, einen Verkaufs- und Transportbehälter in Form eines Gitterkorbes zu schaffen, der mit geringem technischem Aufwand auch bei hohem Füllgewicht in einer Gebrauchsstellung verfahrsicher festlegbar ist und bei einfacher Handhabung eine schnelle Verlagerung zu einem neuen Aufstellungsort hin ermöglicht.

Die Erfindung löst diese Aufgabe mit einem Verkaufs- und Transportbehälter mit den Merkmalen des Anspruchs 1. Hinsichtlich wesentlicher weiterer Ausgestaltungen wird auf die Ansprüche 2 bis 8 verwiesen.

Der erfindungsgemäße Verkaufs- und Transportbehälter zur Warenpräsentation weist im Bereich seines mit bodenseitigen Stützfüßen versehenen Gestells eine einfach handhabbare Hubvorrichtung auf, mittels der die Stützfüße bzw. deren Stützrollen aus ihrer bodenseitigen Rollstellung abhebbar sind. Dabei wird der gesamte Behälter zumindest einseitig abgehoben und in seiner Benutzungsstellung mittels zumindest eines bodenseitig aufliegenden Hubstempels fixiert. Für eine danach vorgesehene Änderung dieses Aufstellortes kann der Behälter durch Betätigung der Hubvorrichtung im Bereich der Hubstempel abgesenkt werden, die abgehobene Stützrolle gelangt in ihre bodenseitige Auflagestellung und danach kann der Behälter auch in gefülltem Zustand auf sämtlichen Stützrollen verfahren werden.

Diese mit den Stützrollen zusammenwirkende Hubvorrichtung ist dabei so konzipiert, daß bereits mit einem Hubstempel eine Entlastung einer der Stützrollen erfolgen kann und damit eine verschiebesichere Abstützung des Behälters möglich ist. In zweckmäßiger Ausführung ist die Hubvorrichtung an einem Paar gegenüberliegender Stützfüße mit einem jeweiligen Hubstempel wirksam, wobei diese einzeln oder durch eine gemeinsame Hand- und/oder Fußbetätigung bedienbar sind. Damit kann der Behälter im Bereich einer Längs- oder Querseite einseitig so angehoben werden, daß die beiden Hubstempel eine eine ungewollte Verlagerungen des Behälters verhindernde Bremsstellung definieren. Im Bedarfsfall kann der Behälter mittels der Hubvorrichtung bzw. durch das Lösen der Hand- und/oder Fußbetätigung wieder auf die Stützrollen abgesenkt und auf diesen abgestützt werden. Diese Bewegungen sind insbesondere auch bei voller Beladung möglich. Der leere oder beladene Behälter ist mit geringem Bedienaufwand von Hand an einen weiteren Aufstellungsort verschiebbar, mittels der sicher bedienbaren Hubvorrichtung einfach fixierbar und gegen ungewollte Verschiebungen zuverlässig gesichert.

Weitere Einzelheiten und Vorteile der Erfindung ergeben sich aus der nachfolgenden Beschreibung und der Zeichnung, in der zwei Ausführungsbeispiele des Verkaufs-und Transportbehälters näher veranschaulicht sind. In der Zeichnung zeigen:
- Fig. 1: eine Perspektivdarstellung des Verkaufs- und Transportbehälters in Form des Gitterkorbes mit einem Gestell, das im Nahbereich zweier eckseitiger Stützpfosten eine mit jeweiligen Hubstempeln versehene Hubvorrichtung aufweist,
- Fig. 2: eine vergrößerte Ausschnittsdarstellung des Behälters gemäß Fig. 1 im Bereich der Hubvorrichtung,
- Fig. 3: eine vergrößerte Ausschnittsdarstellung der Hubvorrichtung im Bereich eines Hubstempels in Nichtgebrauchsstellung,
- Fig. 4: die Hubvorrichtung gemäß Fig. 3 in Gebrauchsstellung, und
- Fig. 5: eine Perspektivdarstellung ähnlich Fig. 1 mit zwei paarweise zusammenwirkende Hubstempel im Bereich der eckseitigen Stützpfosten aufweisenden Hubvorrichtungen.

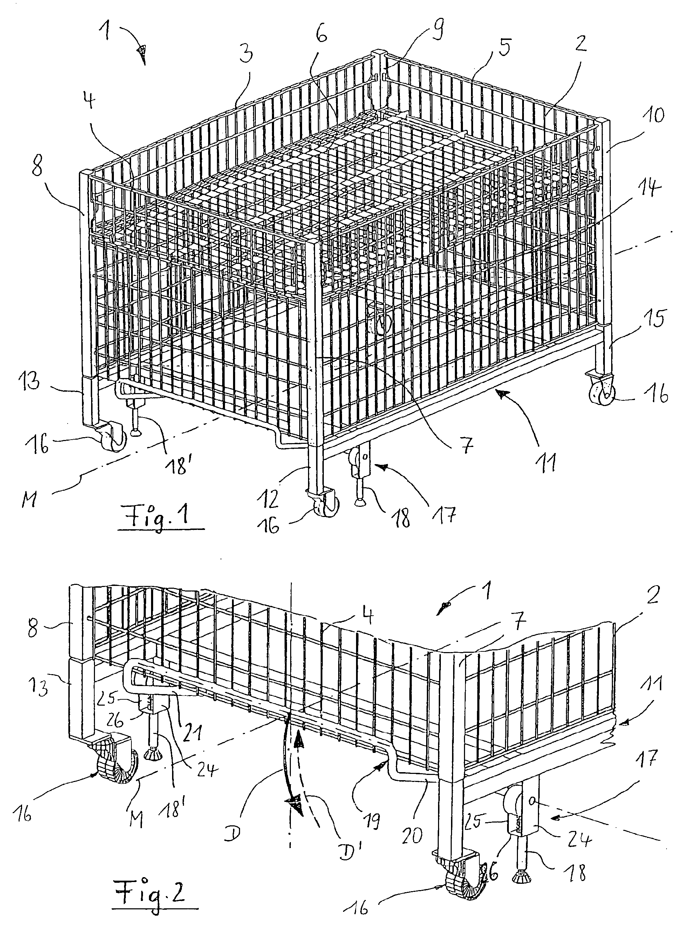

In Fig. 1 ist ein insgesamt mit 1 bezeichneter Verkaufs- und Transportbehälter in Form eines Gitterkorbes dargestellt, der aus paarweise gegenüberliegend angeordneten Längs- und Querseitenwänden 2, 3 und 4, 5 aufgebaut ist. Diese vier Wände sind gemeinsam mit einer waagerechten Bodenwand 6 an einem eckseitige Stützpfosten 7, 8, 9, 10 aufweisenden Gestell 11 festgelegt, wobei zur Verfahrbarkeit des Behälters 1 an den Stützfüßen 12, 13, 14, 15 sämtlicher Stützpfosten 7, 8, 9, 10 eine jeweilige Stützrolle 16 vorgesehen ist und damit der Behälter 1 eine einfache Handhabung ermöglicht.

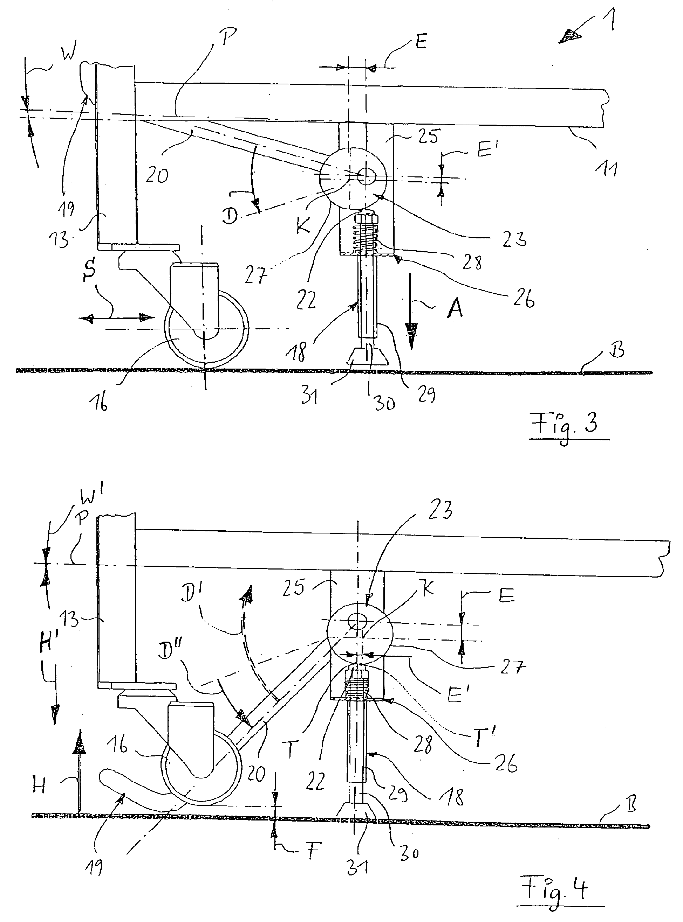

Der Verkaufs- und Transportbehälter 1 erfindungsgemäßer Ausführung ist im Bereich des Gestells 11 mit einer Hubvorrichtung 17 versehen, die im Nahbereich zumindest eines der Stützfüße 12 einen in eine bodenseitige Stützstellung (Fig. 4) verlagerbaren Hubstempel 18 aufweist.

In der Ausführung des Behälters 1 gemäß Fig. 1 weist die Hubvorrichtung 17 zwei im Nahbereich der Querseitenwand 4 bzw. der beiden Stützfüße 12 und 13 spiegelbildlich einer Längsmittelebene M gegenüberliegende Hubstempel 18, 18' auf.

Diese Hubstempel können im Bereich der Hubvorrichtung 17 mit einer Antriebsbetätigung versehen sein, so daß die Hubstempel 18 und 18' einzeln in die bodenseitige Stützstellung (Pfeil A, Fig. 3) verlagerbar und aus dieser rückführbar sind. Ebenso ist denkbar, daß beide Hubstempel 18 und 18' gemeinsam und gleichzeitig in die Stützstellung verlagerbar und aus dieser rückholbar sind. In jedem Fall wird bei in Stützstellung auf dem Boden B verlagertem Hubstempel 18 eine die horizontale Rollbewegung der Stützrollen 16 und damit eine Verschiebung des Behälters 1 gemäß Pfeil S verhindernde Bremsstellung erreicht.

Für die Bewegung des Hubstempels 18, 18' in die Brems- bzw. Stützstellung kann eine von einer Bedienperson ausgeübte Stellbewegung genutzt werden. Denkbar ist auch, daß im Bereich der Hubvorrichtung 17 ein elektrischer, hydraulischer, pneumatischer und/oder magnetischer Antrieb (nicht dargestellt) als Antriebsbetätigung vorgesehen wird. In einfachster Ausführung kann dabei eine durch die Bedienperson per Hand oder Fuß betätigbare hydraulische Pumpe vorgesehen sein (nicht dargestellt).

Die Zusammenschau von Fig. 2 bis 4 zeigt eine bevorzugte Ausführung der Hubvorrichtung 17, wobei diese mit einem per Fußbetätigung einfach erreichbaren und durch die Bedienperson schwenkbaren (Pfeil D, D') Bedienhebel 19 versehen ist, der mittels jeweiliger Verbindungsschenkel 20, 21 mit dem jeweiligen Hubstempel 18, 18' verbunden ist.

In Fig. 3 ist die Verlagerung eines der Hubstempel 18 in eine bodenseitige Auflagestellung mit einem Pfeil A dargestellt. Nach Erreichen der bodenseitigen Auflagestellung (Fig. 4) ist zumindest eine der Stützrollen bzw. ein Stützrollenpaar 16 vom Boden B abhebbar (Pfeil H), so daß damit eine ortsfeste Fixierung des insgesamt um eine Höhe F angehobenen Behälters 1 gebildet ist. Für diese sich aus der Zusammenschau von Fig. 3 und 4 ergebende Hubverlagerung des Behälters 1 ist die Hubvorrichtung 17 im Bereich der Hubstempel 18, 18' jeweils mit einem endseitig bei 22 an diesen angreifenden und mittels des Bedienhebels 19 schwenkbaren Spannexzenter 23 versehen.

Bei Verlagerung des Bedienhebels 19, beispielsweise durch die Fußbewegung einer Bedienperson, erfolgt eine Bewegungseinleitung entgegen dem Uhrzeigersinn (Pfeil D). In dieser ersten Phase wird der Spannexzenter 23 so geschwenkt, daß der Hubstempel 18, 18' in die den Behälter 1 zumindest unverrückbar festlegende Stützstellung gelangt (Pfeil A). Der Spannexzenter 23 ist dabei zwischen jeweiligen Stützschenkeln 24, 25 einer Halterung 26 des Hubstempels 18 so festgelegt, daß der eine Exzentrizität E aufweisende kreisförmige Spannexzenter 23 bei der Schwenkung gemäß Pfeil D die Absenkbewegung in Pfeilrichtung A bis zur Auflage eines Stützfußes 31 auf dem Boden B bewirkt.

Danach wird in einer zweiten Bewegungsphase mit dem bodenseitig bei B aufliegenden Hubstempel 18 der Behälter 1 bzw. die Stützrolle 16 angehoben, wobei durch Weiterschwenken (Pfeil D", Fig. 4) des Bedienhebels 19 im Bereich des bei 22 auf dem Hubstempel 18 aufliegenden Spannexzenter 23 die Schwenk-Bewegung D" in eine Hubkraft umgesetzt wird und in Längsrichtung des Hubstempels 18 eine Anhebung (Pfeil H) des Behälters 1 erfolgt. Der Hubstempel 18 weist dabei ein äußeres Führungsrohr 29, eine mit Gewinde versehene innere Stützstange 30 und den aus Kunststoff oder Gummi bestehenden Stützfuß 31 auf.

Der Spannexzenter 23 bewegt sich in der Hubphase H mit seinem Außenumfang 27 über den eine Totpunkt-Stellung T am jeweils eine Hutmutter aufweisenden und einen Scheitelpunkt definierenden Ende 22 des Hubstempels 18 hinweg, so daß in einer Position bei T' eine kraft- und formschlüssige sowie als selbsthemmende Rückschwenksperre wirksame Verbindung von Hubstempel 18 und Spannexzenter 23 erreicht wird. Diese Sperrung kann nur durch eine Bewegungseinleitung im Bereich des Bedienhebels 19 (Pfeil D') überwunden werden und danach ist mittels des zurückschwenkenden Spannexzenters 23 eine Absenkbewegung (Pfeil H', Fig. 4) des Behälters 1 ermöglicht. Die Perspektivdarstellung gemäß Fig. 2 verdeutlicht, daß die paarweise gegenüberliegenden Hubstempel 18, 18'jeweilige Spannexzenter 23 aufweisen, die durch die jeweiligen Verbindungsschenkel 20, 21 mit dem zentral angeordneten Bedienhebel 19 so zusammenwirken, daß eine synchrone Verlagerung der Hubstempel 18, 18' erreicht wird und ein gleichmäßiges Heben und Senken des Behälters 1 möglich ist.

In zweckmäßiger Ausführung weist die Hubvorrichtung 17 im Bereich des Hubstempels 18, 18' eine sich durch die Schwenkbewegung D, D" des Bedienhebels 19 bzw. des Spannexzenters 23 komprimierende Druckfeder 28 auf, die bei Freigabe des Hubstempels 18 (Fig. 4) ihre potentielle Energie freigibt und damit die Rückschwenkbewegung des Bedienhebels 19 in Pfeilrichtung D' so unterstützt wird, daß die Ausgangsstellung (Fig. 2) weitgehend selbsttätig erreichbar ist.

In Fig. 3 ist mit einem Winkel W eine Schrägstellung des Behälters 1 bzw. des Gestells 11 in der Freigabe- bzw. Fahrstellung der Stützrolle 16 dargestellt. Dabei ist der Hubweg F im Bereich der Hubvorrichtung 17 auf die Schrägstellung W des Behälters 1 so abgestimmt, daß erst bei der in Fig. 4 dargestellten Bedienstellung eine horizontale Ausrichtung (Ebene P) des Behälters 1 erfolgt, dieser bei der Warenpräsentation mit einem Schrägungswinkel W' = 0° aufgestellt ist und damit eine optisch ansehnliche Gebrauchsstellung erreicht wird.

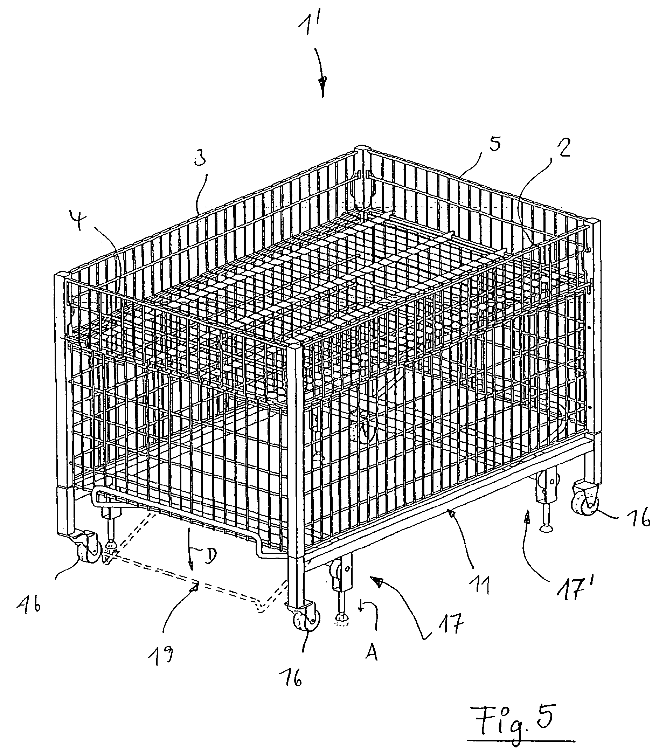

In der Darstellung gemäß Fig. 5 ist veranschaulicht, daß der Behälter 1' in einer zweiten Ausführung im Bereich beider Querseitenwände 4, 5 mit jeweils einer Hubvorrichtung 17, 17' versehen ist. Denkbar ist außerdem, daß im Bereich der allgemein mit 16 bezeichneten Stützrollen einerseits zwei Lenkrollen und andererseits zwei Bockrollen (nicht dargestellt) vorgesehen sein können. Damit wird eine Fixierung des Behälters 1 bereits dadurch erreichbar, daß nur im Bereich der Lenkrollen die Hubvorrichtung 17 vorgesehen wird. Ebenso ist denkbar, daß die beiden in Fig. 5 dargestellten Hubvorrichtungen 17, 17' sowohl im Bereich der Bockrollen als auch der Lenkrollen vorgesehen sind.

Die die vorbeschriebene bodennahe Festlegung aufweisende und nur wenige Bauteile erfordernde Konstruktion der Hubvorrichtung 17, 17' ist so konzipiert, daß diese Hubvorrichtung(en) auch für Behälter einsetzbar ist/sind, die klappbar mit dem Gestell 11 verbundene Längs- und Querseitenwände bzw. eine klappbare Bodenwand aufweist. Diese nicht näher dargestellte Ausführung des Verkaufs- und Transportbehälters 1 kann in eine raumsparende Klappstellung verbracht und durch Betätigung der Hubvorrichtung in einer gesicherten Ablagestellung abgestellt werden, in der beispielsweise ein Behälterstapel (nicht dargestellt) verschiebesicher in Nichtgebrauchsstellung auf einem untenliegenden Behälter 1 festlegbar ist. Außerdem ist die Hubvorrichtung 1 als ein Nachrüst-Bausatz ausführbar, so daß vorhandene Verkaufs- und Transportbehälter komplettiert werden können. Dazu sind die Bauteile im Bereich der Stützschenkel 24, 25 bzw. der jeweiligen Hubvorrichtung 17 über eine Schraub- oder Schweißverbindung am Gestell 11 festlegbar und damit vorhandene Behälter ebenfalls verschiebesicher aufstellbar.

## Patentansprüche

1. Verkaufs- und Transportbehälter zur Warenpräsentation, bestehend aus paarweise gegenüberliegenden vertikalen Längs- und Querseitenwänden (2, 3 und 4, 5) sowie einer zwischen diesen Wänden vorgesehenen waagerechten Bodenwand (6), wobei einen Bodenabstand vorgebende Stützfüße (12, 13, 14, 15) mit jeweiligen eine Fahrbewegung des Behälters (1, 1') ermöglichenden Stützrollen (16) zusammenwirken und im Nahbereich zumindest eines Stützfußes (12) eine Hubvorrichtung (17, 17') mit in eine bodenseitige Stützstellung verlagerbarem Hubstempel (18, 18') vorgesehen ist, wobei der Verkaufs- und Transportbehälter (1, 1') ein im Bereich eckseitiger Stützpfosten (7, 8, 9, 10) mit jeweiligen Gitterwand-Teilen als Längs-, Quer- und Bodenwände (2, 3, 4, 5, 6) verbundenes Gestell (11) aufweist, an diesem eine eine bodennahe Festlegung aufweisende Hubvorrichtung (17, 17') mit zwei Hubstempeln (18, 18') vorgesehen ist und diese im Bereich jeweiliger Verbindungsschenkel (20, 21) mit einem per Fußbetätigung (Pfeil T, T') schwenkbaren Bedienhebel (19) zusammenwirken, wobei die Hubvorrichtung (17, 17') im Bereich des jeweiligen Hubstempels (18, 18') einen an diesem endseitig (bei 22) angreifenden sowie mittels des Bedienhebels (19) schwenkbaren Spannexzenter (23) aufweist und dieser Spannexzenter (23) zwischen jeweiligen Stützschenkeln (24, 25) einer Halterung (26) des Hubstempels (18) festgelegt ist.

2. Verkaufs- und Transportbehälter nach Anspruch 1, **dadurch gekennzeichnet, dass** die Hubstempel (18, 18') gemeinsam und gleichzeitig in die Stützstellung verlagerbar und aus dieser rückholbar sind.

3. Verkaufs- und Transportbehälter nach Anspruch 1 oder 2, **dadurch gekennzeichnet, dass** die Hubstempel (18, 18') der Hubvorrichtung (17, 17') durch eine Bedienperson oder einen elektrischen, hydraulischen, pneumatischen und/oder magnetischen Antrieb verlagerbar sind.

4. Verkaufs- und Transportbehälter nach einem der Ansprüche 1 bis 3, **dadurch gekennzeichnet, dass** bei Verlagerung der beiden Verbindungsschenkel (20, 21) des Bedienhebels (19) entgegen dem Uhrzeigersinn (Pfeil D) in einer ersten Phase der Spannexzenter (23) in die den Behälter (1, 1') unverrückbar festlegende Stützstellung schwenkbar ist und in einer zweiten Phase (Pfeil D') mit dem bodenseitig aufliegenden Hubstempel (18) durch Weiterschwenken des Bedienhebels (19) der Behälter anhebbar (Pfeil H) ist.

5. Verkaufs- und Transportbehälter nach einem der Ansprüche 1 bis 4, **dadurch gekennzeichnet, dass** die Auflageebene (P) des Gestells (11) des Behälters (1, 1') in dessen angehobener Stützstellung waagerecht (Winkel W') verläuft.

6. Verkaufs- und Transportbehälter nach einem der Ansprüche 1 bis 5, **dadurch gekennzeichnet, dass** dieser (1, 1') im Bereich paarweise gegenüberliegender Stützfüße (12, 13 bzw. 14, 15) einerseits zwei Bockrollen und andererseits zwei Lenkrollen aufweist und nur im Bereich dieser Lenkrollen die Hubvorrichtung (17, 17') vorgesehen ist.

7. Verkaufs- und Transportbehälter nach einem der Ansprüche 1 bis 6, **dadurch gekennzeichnet, dass** sowohl im Bereich der Bockrollen als auch der Lenkrollen jeweils eine Hubvorrichtung (17, 17') vorgesehen ist.

8. Verkaufs- und Transportbehälter nach einem der Ansprüche 1 bis 7, **dadurch gekennzeichnet, dass** dessen Längs- und Querseitenwände (2, 3 bzw. 4, 5) und die Bodenwand (6) klappbar mit dem Gestell (11) verbunden sind und die Hubvorrichtung (17, 17') auch bei zusammengelegten Wänden bedienbar ist.

## Claims

1. Transport and sales container for the presentation of articles, consisting of vertical longitudinal and transverse side walls (2, 3 and 4, 5) that are opposite one another in pairs, and a horizontal base wall (6) that is provided between said longitudinal and transverse walls, wherein support feet (12, 13, 14, 15) that predetermine a ground clearance cooperate with support rollers (16) that in each case enable the container (1, 1') to move along, and a lifting device (17, 17'), which has lifting props (18, 18') that can be moved into a support position on the ground, is provided in the vicinity of at least one support foot (12), wherein the transport and sales container (1, 1') comprises a frame (11) that is connected, in the region of support pillars (7, 8, 9, 10) at the corners, to each mesh wall part in the form of longitudinal, transverse and base walls (2, 3, 4, 5, 6), on said frame a lifting device (17, 17') that comprises a fixing means close to the ground is provided with two lifting props (18, 18') and these lifting props cooperate, in the region of each connecting leg (20, 21), with an operating lever (19) that is pivotable by means of foot actuation (arrow T, T'), wherein the lifting device (17, 17') comprises, in the region of each lifting prop (18, 18'), a clamping cam (23) that acts on said lifting prop at an end thereof (at 22) and is pivotable by means of the operating lever (19) and said clamping cam (23) is fixed between respective support legs (24, 25) of a holder (26) of the lifting prop (18).

2. Transport and sales container according to claim 1, **characterised in that** the lifting props (18, 18') can be moved jointly and simultaneously into and back out of the support position.

3. Transport and sales container according to either claim 1 or claim 2, **characterised in that** the lifting props (18, 18') of the lifting device (17, 17') can be moved by an operator or by means of an electrical, hydraulic, pneumatic and/or magnetic drive.

4. Transport and sales container according to any of claims 1 to 3, **characterised in that**, when the two connecting legs (20, 21) of the operating lever (19) are moved in an anticlockwise direction (arrow D), in a first phase the clamping cam (23) is pivotable into the support position that immovably fixes the container (1, 1'), and in a second phase (arrow D') the container can be lifted (arrow H) by means of the lifting prop (18) that rests on the ground by further pivoting the operating lever (19).

5. Transport and sales container according to any of claims 1 to 4, **characterised in that** the support plane (P) of the frame (11) of the container (1, 1') extends horizontally (angle W') when said container is in the raised support position.

6. Transport and sales container according to any of claims 1 to 5, **characterised in that** said container (1, 1') comprises in the region of support feet (12, 13 and 14, 15), which are opposite one another in pairs, two fixed castors on one side and two swivel castors on the other side and the lifting device (17, 17') is provided only in the region of said swivel castors.

7. Transport and sales container according to any of claims 1 to 6, **characterised in that** a lifting device (17, 17') is provided in each case in both the region of the fixed castors and the region of the swivel castors.

8. Transport and sales container according to any of claims 1 to 7, **characterised in that** the longitudinal and transverse side walls (2, 3 and 4, 5) and the base wall (6) are foldably connected to the frame (11) and the lifting device (17, 17') is operable even when the walls are folded.

## Revendications

1. Récipient de vente et de transport destiné à la présentation de marchandises, composé de parois longitudinales et transversales verticales (2, 3 et 4, 5) opposées par paire, ainsi que d'une paroi inférieure (6) horizontale prévue entre ces parois,
dans lequel des pieds d'appui (12, 13, 14, 15) qui prédéfinissent une distance par rapport au plancher coopèrent respectivement avec des rouleaux d'appui (16) qui permettent un mouvement de translation du récipient (1, 1') et, à proximité d'au moins un pied d'appui (12), est prévu un dispositif de levage (17, 17') avec des pistons de levage (18, 18') qui peuvent être déplacés dans une position d'appui côté plancher,
dans lequel le récipient de vente et de transport (1, 1') présente un châssis (11) relié, au niveau de montants d'appui (7, 8, 9, 10) du côté des angles, à des parties de parois de grilles respectives servant de parois longitudinale, transversale et inférieure (2, 3, 4, 5, 6), châssis sur lequel un dispositif de levage (17, 17') qui présente une fixation proche du plancher est prévu avec deux pistons de levage (18, 18') et ceux-ci coopèrent au niveau des branches de liaison respectives (20, 21) avec un levier de manoeuvre (19) qui peut pivoter par l'actionnement du pied (flèche T, T'), le dispositif de levage (17, 17') présentant au niveau du piston de levage respectif (18, 18') un excentrique de serrage (23) qui s'engage dans celui-ci du côté de son extrémité (en 22) et peut pivoter au moyen du levier de manoeuvre (19) et cet excentrique de serrage (23) est fixé entre des branches d'appui respectives (24, 25) d'un support (26) du piston de levage (18).

2. Récipient de vente et de transport selon la revendication 1, **caractérisé en ce que** le piston de levage (18, 18') peut être déplacé conjointement et simultanément dans la position d'appui et être enlevé de celle-ci.

3. Récipient de vente et de transport selon la revendication 1 ou 2, **caractérisé en ce que** le piston de levage (18, 18') du dispositif de levage (17, 17') peut être déplacé par un opérateur ou un entraînement électrique, hydraulique, pneumatique et/ou magnétique.

4. Récipient de vente et de transport selon une des revendications 1 à 3, **caractérisé en ce que**, lors du déplacement des deux branches de liaison (20, 21) du levier de manoeuvre (19) dans le sens contraire aux aiguilles d'une montre (flèche D) dans une première phase, l'excentrique de serrage (23) peut pivoter dans la position d'appui qui fixe de manière immuable le récipient (1, 1') et, dans une seconde phase (flèche D'), le récipient peut être relevé (flèche H) avec le piston de levage (18) reposant côté plancher en continuant le pivotement du levier de manoeuvre (19).

5. Récipient de vente et de transport selon une des revendications 1 à 4, **caractérisé en ce que** le plan d'appui (P) du châssis (11) du récipient (1, 1') s'étend horizontalement dans sa position d'appui relevée (angle W').

6. Récipient de vente et de transport selon une des revendications 1 à 5, **caractérisé en ce que** celui-ci (1, 1') présente, au niveau des pieds d'appui (12, 13 respectivement 14, 15) opposés par paire, d'une part deux rouleaux de support et d'autre part deux rouleaux de guidage et le dispositif de levage (17, 17') n'est prévu qu'au niveau de ces rouleaux de guidage.

7. Récipient de vente et de transport selon une des revendications 1 à 6, **caractérisé en ce qu'**un dispositif de levage (17, 17') est respectivement prévu aussi bien au niveau des rouleaux de support que des rouleaux de guidage.

8. Récipient de vente et de transport selon une des revendications 1 à 7, **caractérisé en ce que** ses parois longitudinale et transversale (2, 3 respectivement 4, 5) et la paroi inférieure (6) sont reliées au châssis (11) de manière pliable et le dispositif de levage (17, 17') est également manoeuvrable lorsque les parois sont assemblées.
